# EUROPÄISCHE PATENTSCHRIFT

(11) **EP 2 414 127 B1**
(45) Veröffentlichungstag und Bekanntmachung des Hinweises auf die Patenterteilung: **20.05.2015**
(21) Anmeldenummer: 10718504.3
(22) Anmeldetag: 31.03.2010
(51) Int. Cl.: B23K 9/04, B23K 10/02, B23K 15/00, B23K 26/34, B23P 6/00, C21D 9/50, F01D 5/00

(54) **VERFAHREN ZUM SCHWEISSEN EINER VERTIEFUNG EINES BAUTEILES DURCH AUSSERHALB ODER UM DIE KONTUR ANGELEGTE SCHWEISSBAHNEN ; ENTSPRECHENDER BAUTEIL**
METHOD FOR WELDING A RECESS IN A COMPONENT BY MEANS OF SHEETING FOR FUSION WELDING APPLIED OUTSIDE OR AROUND THE CONTOUR, AND CORRESPONDING COMPONENT
METHODE DE SOUDAGE D'UN EVIDEMENT DANS UN COMPOSANT PAR LE DEPOT DE CORDONS DE SOUDURE A L'EXTERIEUR OU AUTOUR DU CONTOUR ; COMPOSANT CORRESPONDANT

(30) Priorität: 03.04.2009 DE 102009016260
(43) Veröffentlichungstag der Anmeldung: 08.02.2012
(73) Patentinhaber: Siemens Aktiengesellschaft, 80333 München (DE); Fraunhofer-Gesellschaft zur Förderung der angewandten Forschung e.V., 80686 München (DE)
(72) Erfinder: ARJAKINE, Nikolai, 10555 Berlin (DE); BOSTANJOGLO, Georg, 12161 Berlin (DE); BURBAUM, Bernd, 14612 Falkensee (DE); GASSER, Andres, 52066 Aachen (DE); JAMBOR, Torsten, 50937 Köln (DE); LINNENBRINK, Stefanie, 52372 Kreuzau (DE); MELZER-JOKISCH, Torsten, 15366 Neuenhagen bei Berlin (DE); OTT, Michael, 45470 Mülheim an der Ruhr (DE); PIRCH, Norbert, 52074 Aachen (DE); WILKENHÖNER, Rolf, 14532 Kleinmachnow (DE)
(86) Internationale Anmeldenummer: PCT/EP2010/054322
(87) Internationale Veröffentlichungsnummer: WO 2010/112553

(56) Entgegenhaltungen:
- DE-A1-102007 034 242
- JP-A- 7 241 692
- JP-A- 8 001 332
- JP-A- 8 323 473
- JP-A- 2001 287 062
- US-A- 5 060 842
- US-A1- 2002 125 216
- US-A1- 2002 130 112
- US-A1- 2004 191 064
- US-B1- 6 436 553

## Beschreibung

Die Erfindung betrifft Verfahren zum Füllen einer Vertiefung eines Bauteils durch Schweißen gemäß dem Oberbegriff des Anpruchs 1 (siehe, z.B., JP 8/3234473A).

Bei der Schweißreparatur von Bauteilen werden oft auch Vertiefungen aufgefüllt. Diese Vertiefungen entstehen durch Ausmulden eines schadhaften Bereichs, der während des Betriebs des Bauteils entstanden ist. Zur Wiederaufarbeitung muss Material hinzugefügt werden, um die Geometrie des Bauteils sowie eine hinreichende Festigkeit des Bauteils zu erreichen. Je nach Schweißzusatzwerkstoff kann es immer wieder zu Anbindungsfehlern und Rissen des hinzugefügten Materials kommen.

Es ist daher Aufgabe der Erfindung oben genanntes Problem zu lösen.

Das Problem wird gelöst durch ein Verfahren gemäß Anspruch 1.

In den Unteransprüchen 2 bis 8 sind weitere vorteilhafte Maßnahmen aufgelistet, die beliebig miteinander kombiniert werden können, um weitere Vorteile zu erzielen.

Es zeigen
- Figur 1 - 9: Füllstrategien beim Schweißen,
- Figur 10 - 12: Vorgehensweisen bei einer Wärmebehandlung einer Schweißnaht
- Figur 13: eine Gasturbine,
- Figur 14: eine Turbinenschaufel,
- Figur 15: eine Brennkammer,

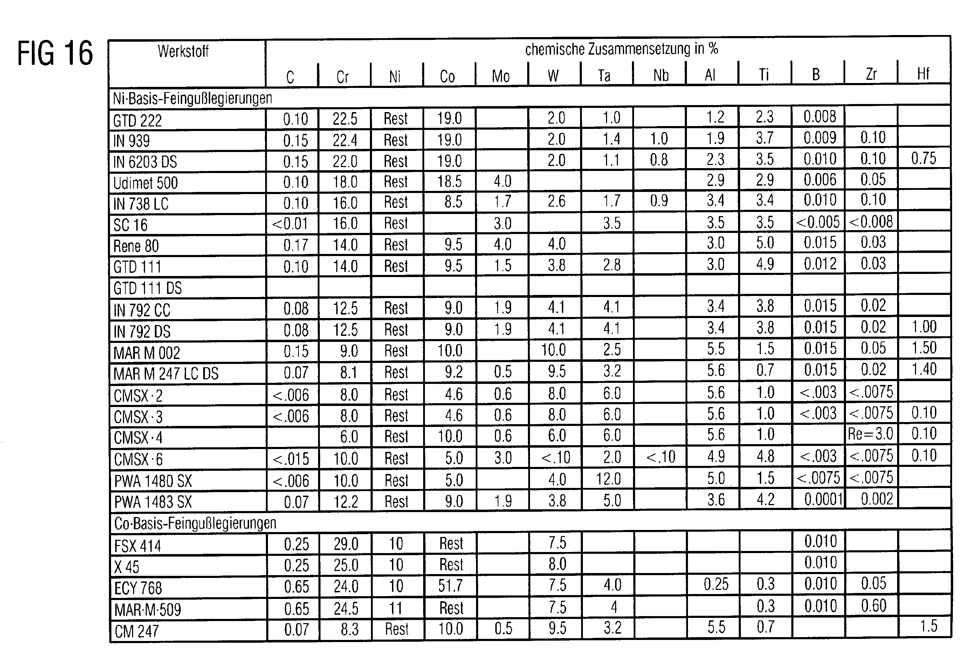

- Figur 16: eine Liste von Superlegierungen.

Die Figuren und die Beschreibung stellen nur Ausführungsbeispiele dar.

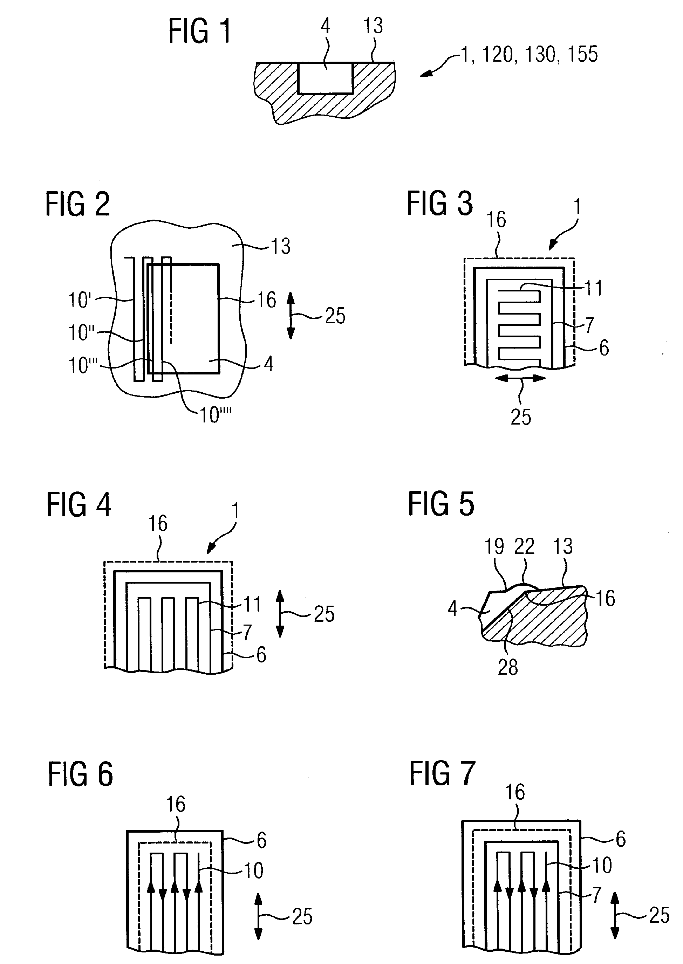

In Figur 1 ist ein Bauteil 1, 120, 130, 155 gezeigt, das im Bereich einer Oberfläche 13 eine Vertiefung 4 aufweist.

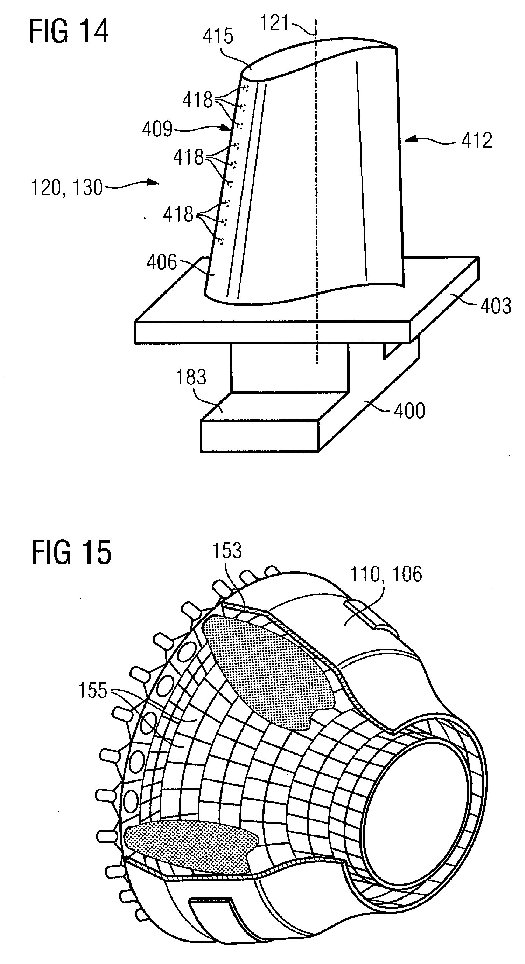

Das Bauteil 1 ist vorzugsweise eine Turbinenschaufel 120, 130 und besteht vorzugsweise aus einer nickel- oder kobaltbasierten Superlegierung (Fig. 15).

Die Vertiefung 4 soll mit Schweißmaterial aufgefüllt werden. Die Vertiefung 4 wird durch eine Kontur 16 (eine geschlossene Linie) zu der äußeren Oberfläche 13 begrenzt.

Die Vertiefung 4 weist Flanken 28 auf, die vorzugsweise schräg und nicht senkrecht zur Oberfläche 13 nahe der Kontur 16 verlaufen (Fig. 5). Die Flankenwinkel (Winkel zwischen Flanke 28 und gedachte Verlängerung der Oberfläche 13 über die Vertiefung 4) betragen vorzugsweise zwischen 30° und 40°.

Die Auffüllung der Vertiefung 4 geschieht vorzugsweise durch Auftragsschweißen.

Als Schweißverfahren wird vorzugsweise ein Laserverfahren verwendet.

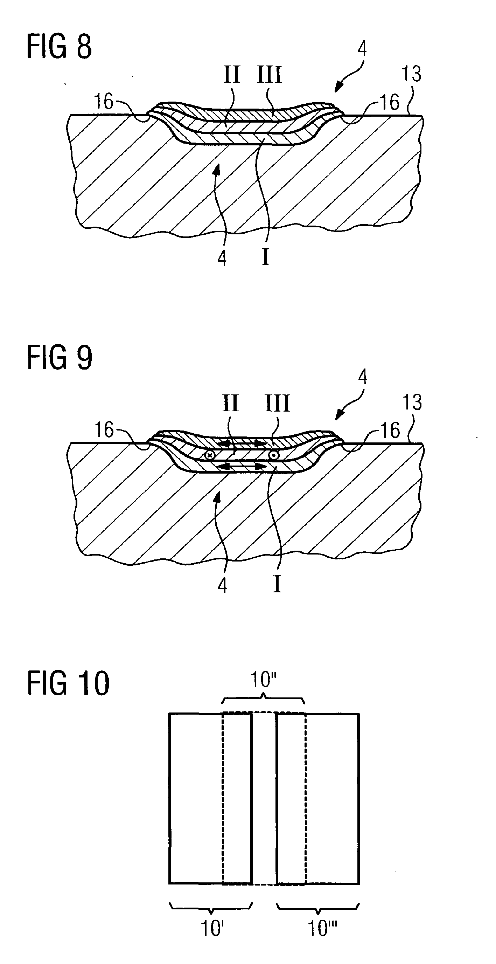

Eine Schweißlage I, II, III (Fig. 8, 9) besteht aus mehreren Schweißbahnen 10', 10", 10''', die eine zusammenhängende Fläche ergeben. Die Schweißbahnen 10', 10'', 10''' pro Schweißlage I, II, III werden vorzugsweise in einer Mäanderform (Fig. 2, 3, 4, 6, 7) gelegt.

Eine Hauptrichtung 25 der Schweißbahnen 10', 10'', 10''',... stellt die längste Ausdehnung 11 einer Schweißbahn 10', 10'', 10''' dar und ist als Pfeil in den Figuren 2, 3, 4, 6, 7 und 10 dargestellt.

Jedoch überschreiten die Schweißbahnen 10', 10'', 10''', ... die Kontur 16 der Vertiefung 4 und gelangen somit teilweise auf die Oberfläche 13 (Fig. 2, 5, 6, 7, 8, 9). Vorzugsweise befindet sich die Schweißbahn 10', 10'',... sowohl auf der Oberfläche 13 des Bauteils 1, 120, 130, 155 als auch in der Vertiefung 4.

Der Querschnitt solcher übereinander gelegten Lagen I, II, III ist in Figur 8, 9 gezeigt.

Der dabei entstehende Hügel 22 (Fig. 5), der über die Ebene der Oberfläche 13 hinausragt, wird entweder belassen oder später abgeschliffen oder mittels Fräsen entfernt.

Durch das bewusste Überschreiten, also durch zusätzliches Schweißmaterial im Bereich der Oberfläche 13, werden gute Schweißergebnisse erzielt und es entstehen in dem fertig geschweißten Bauteil 1, 120, 130, 155 keine Risse. Lediglich das Schweißmaterial oberhalb der Oberfläche 13 muss vorzugsweise noch beseitigt werden.

Figur 3 zeigt eine weitere Füllstrategie beim Schweißen. Dabei wird innerhalb der Vertiefung 4 zuerst ein Rahmen 6 gelegt, der 6 der Kontur 16 ähnelt. Dieser Rahmen 6 (= erste Schweißbahn) ist bei einer rechteckförmigen Vertiefung 4 ebenfalls rechteckig.

Diese erste äußere Schweißbahn 6 kann innerhalb der Kontur 16 (Fig. 3, 4) oder auf der Oberfläche 13 (Fig. 6, 7) liegen. Vorzugsweise verläuft die Schweißbahn 6 (Fig. 6, 7) über der Kontur 16, d.h. auf der Oberfläche 13 und in der Vertiefung 4.

Eine weitere Schweißbahn 7 kann gelegt werden, die ebenfalls der äußeren Kontur der Vertiefung 4 entspricht und innerhalb der ersten Schweißbahn 6 liegt (Fig. 4, 7).

Innerhalb der Kontur 6, 7 wird dann ein mäanderförmiger Verlauf der Schweißbahn 10', 10'', ... gewählt (Fig. 3, 4, 6, 7) . Die Ausrichtung 25 des längsten Teils 11 der Zickzackkurve kann auf die kürzeste Breite der Vertiefung 4 (Fig. 3) ausgerichtet sein.

Ebenso kann der längste Teil 11 der Zickzackkurve parallel zu der längsten Ausrichtung der Vertiefung 16 verlaufen (Figur 4, 6, 7). Ebenso kann lagenweise (I, II, III) die Ausrichtung der Hauptrichtung 25 variiert werden (nicht dargestellt).

Es müssen nicht zwangsläufig Vertiefungen aufgefüllt werden. Ebenso kann flächig auf jede Oberfläche Material aufgetragen werden (Fig. 2, 3, 4, 6, 7). Die Kontur 16 stellt dann die Begrenzung der zu beschichtenden Fläche dar.

In Figur 8 ist ein Querschnitt obiger Auffüllstrategie (Fig. 2) nach dem Schweißen gezeigt.

Die Vertiefung 4 wird durch eine erste Lage I von Schweißbahnen vorzugsweise komplett abgedeckt (Fig. 2), d.h. die erste Schweißlage I geht auch vorzugsweise bis zur Kontur 16 und über diese hinaus.

Dann wird eine zweite Schweißlage II aufgebracht, deren Ende ebenfalls über die Oberfläche 13 hinausragt.

Die zweite Schweißlage II deckt die erste Schweißlage I vorzugsweise vollständig ab. Diese Übereinanderschichtung wird fortgeführt, bis gemäß der Erfindung eine letzte Lage III komplett über einer Oberfläche 13 liegt.

Figur 9 zeigt eine weitere Auffüllstrategie beim Schweißen, insbesondere eine spezielle Ausführung zu Figur 8.

Hier wird eine erste Schweißlage I durch mehrere Schweißbahnen (10', 10'', 10''') mit einer Hauptrichtung 25 parallel zur Zeichnungsebene gelegt (Die Ausrichtung von 25 ist willkürlich). Die Hauptrichtung 25 ist die längste Ausdehnung 11 einer Schweißbahn 10', 10'', ... bei mäanderförmiger Verlegung (Fig. 2).

Die zweite Schweißlage II erfolgt mit Schweißbahnen in einer Hauptrichtung 25 verschieden , vorzugsweise senkrecht, zu der Hauptrichtung 25 der Schweißlage I, d.h. aus der Zeichnungsebene, wobei eine Hauptrichtung der Schweißbahnen 10', 10'', ... der dritten Schweißlage III vorzugsweise wiederum wie die erste Schweißlage I verläuft.

Figur 10 zeigt auch, dass die Linien, die die Schweißbahnen, in den Figuren 1 bis 7 darstellen, eine Breite haben. Die Schweißbahnen überlappen sich gemäß der Erfindung; dies gilt auch für die Figuren 1 bis 7.

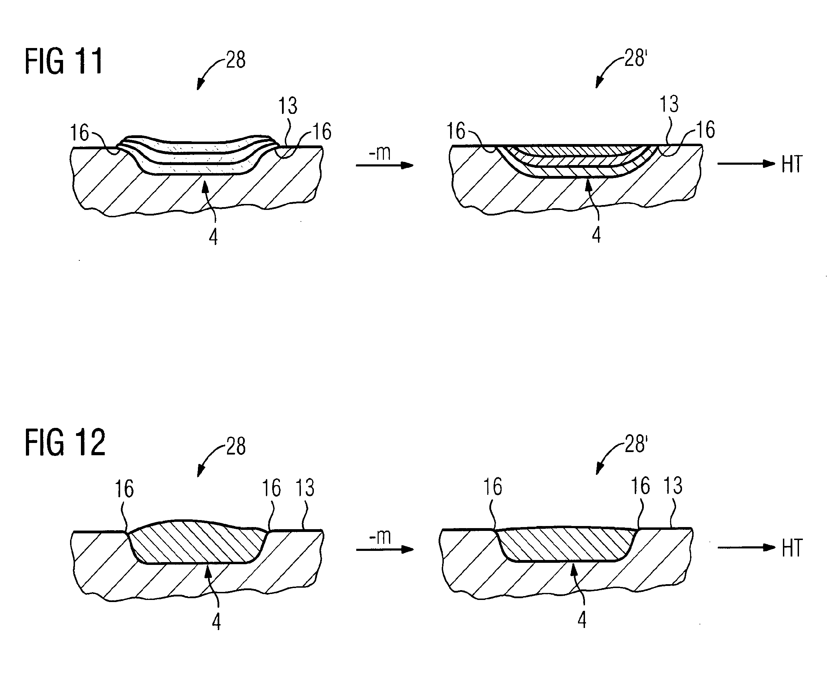

In den Figuren 11, 12 links sind Vorgehensweisen vor der Wärmebehandlung einer Schweißnaht 28 dargestellt.

Sowohl in Figur 11 links und Figur 12 links sind Schweißnähte/lagen 28 dargestellt, die nach einem beliebigen Verfahren hergestellt sind, aber auch über die äußere Originalkontur der Oberfläche 13 des Substrats herausragen. Als nächster Bearbeitungsschritt wird die Schweißung rekonturiert, d.h. die Schweißbahn/-lage wird geglättet und an die Höhe der äußeren Oberfläche 13 angepasst, d.h. es erfolgt Materialabtrag (-m), um die ursprüngliche aerodynamische Kontur wiederherzustellen.

Als letzter Schritt erfolgt dann die je nach Material und Bauteil übliche Wärmebehandlung (HT) mit der Schweißnaht 28.

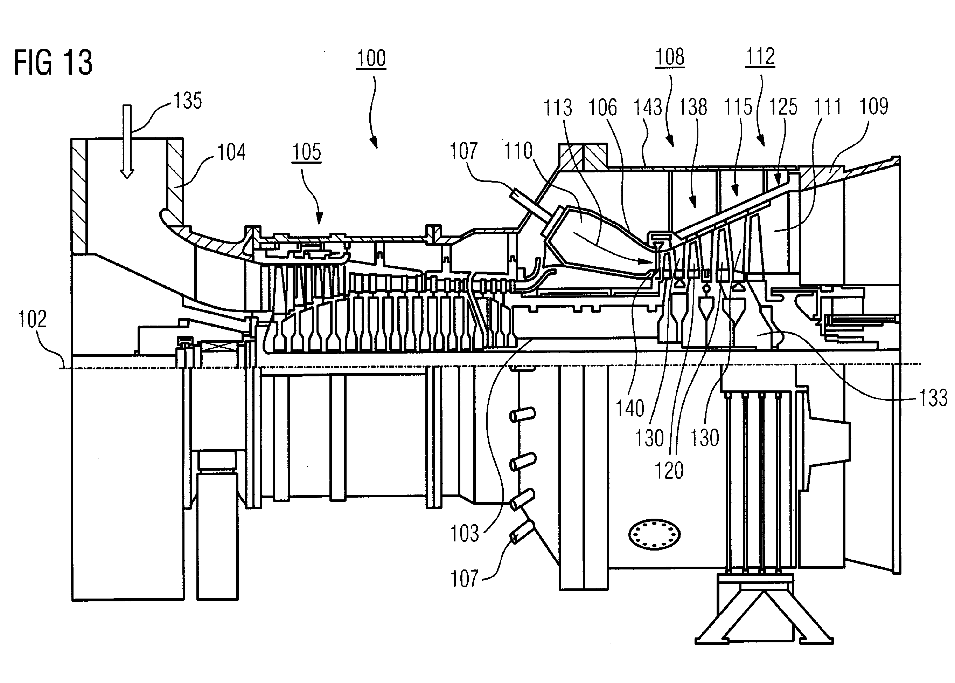

Die Figur 13 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO_{2,} Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 14 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 15 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum Schweißen eines Bauteils (1, 120, 130, 155), bei dem eine Vertiefung (4) durch Schweißbahnen (6, 7, I, II, III, 10', 10'', 10''', ...) aufgefüllt wird,
wobei die Vertiefung (4) eine Kontur (16) aufweist,
die (16) eine äußere obere Oberfläche (13) des Bauteils (1, 120, 130, 155) zu der Vertiefung (4) begrenzt,
**dadurch gekennzeichnet,**
**dass** die Schweißbahnen (6, 7, I, II, III, 10', 10'', 10''', ...)so gelegt werden, dass die Schweißbahnen (10', 10'', 10''', ..., 6, 7, I, II, III) auch außerhalb der Kontur (16) der Vertiefung (4) auf die Oberfläche (13) gelangen und dass mehrere Schweißlagen (I, II, III) verwendet werden, um die Vertiefung (4) aufzufüllen,
bis eine letzte Lage komplett über die Oberfläche (13) hinausragt,
bei dem die weiteren Schweißlagen (II, III, ...) ihre direkte Vorgängerin (I, II, ...) vollständig abdecken.

2. Verfahren nach Anspruch 1,
bei dem eine erste Schweißbahn (6) so gelegt wird,
dass sie (6) in ihrer Form der Form der Kontur (16) entspricht.

3. Verfahren nach Anspruch 2,
dass eine zweite Schweißbahn (7) innerhalb der ersten Schweißbahn (6) erzeugt wird,
die (6) der Kontur (16) entspricht.

4. Verfahren nach Anspruch 2 oder 3,
bei dem innerhalb der ersten oder zweiten konturmäßigen Schweißbahn (6, 7) eine mäanderförmige Auffüllung (10', 10'', 10''', ...) der Vertiefung (4) erfolgt.

5. Verfahren nach Anspruch 1, 2, 3 oder 4,
**dadurch gekennzeichnet, dass**
ein Laserauftragsschweißen verwendet wird.

6. Verfahren nach Anspruch 1, 2, 3, 4 oder 5,
bei dem die erste Lage (I) von Schweißbahnen die Vertiefung (4) vollständig bedeckt.

7. Verfahren nach Anspruch 1,
bei dem die Hauptrichtungen (25) der Schweißbahnen (10', 10'', 10''', ...) der einzelnen, übereinanderliegenden Schweißlagen (I, II, III, ...) in einem Winkel von deutlich größer 0° bis 90°C,
insbesondere senkrecht,
zueinander verlaufen.

8. Verfahren nach Anspruch 1, 2, 3, 4, 5, 6 oder 7,
bei dem die Schweißbahnen (10', 10'', 10''', ...) einer Schweißlage (I, II, III) mäanderförmig verlegt werden.

9. Verfahren nach Anspruch 1, 2, 3, 4, 5, 6, 7, 8 oder 9,
bei dem die Vertiefung (4) Flanken (28) aufweist,
die nicht senkrecht zur Oberfläche (13) des Bauteils (1, 120, 130, 155) verlaufen.

## Claims

1. Process for welding a component (1, 120, 130, 155),
in which process a recess (4) is filled by welding tracks (6, 7, I, II, III, 10', 10'', 10''', ...),
wherein the recess (4) has a contour (16),
which (16) delimits an outer upper surface (13) of the component (1, 120, 130, 155) with respect to the recess (4),
**characterized**
**in that** the welding tracks (6, 7, I, II, III, 10', 10", 10''', ...) are laid such that the welding tracks (10', 10'', 10''', ..., 6, 7, I, II, III) also reach the surface (13) outside the contour (16) of the recess (4), and in that a plurality of welding layers (I, II, III) are used in order to fill the recess (4),
until a last layer protrudes completely beyond the surface (13), in which the further welding layers (II, III, ...) cover their direct predecessor (I, II, ...) completely.

2. Process according to Claim 1,
in which a first welding track (6) is laid such that the shape thereof (6) corresponds to the shape of the contour (16).

3. Process according to Claim 2,
in which a second welding track (7) is produced within the first welding track (6),
which (6) corresponds to the contour (16).

4. Process according to Claim 2 or 3,
in which the recess (4) is filled in a meandering fashion (10', 10'', 10''', ...) within the first or second contour-based welding track (6, 7).

5. Process according to Claim 1, 2, 3 or 4,
**characterized in that**
laser build-up welding is used.

6. Process according to Claim 1, 2, 3, 4 or 5
in which the first layer (I) of welding tracks completely covers the recess (4).

7. Process according to Claim 1,
in which the main directions (25) of the welding tracks (10', 10'', 10'', ...) of the individual welding layers (I, II, III, ...) lying one above another run at an angle of considerably greater than 0° to 90°,
in particular perpendicularly,
with respect to one another.

8. Process according to Claim 1, 2, 3, 4, 5, 6 or 7,
in which the welding tracks (10', 10'', 10''', ...) of a welding layer (I, II, III) are laid in a meandering fashion.

9. Process according to Claim 1, 2, 3, 4, 5, 6, 7, 8 or 9,
in which the recess (4) has flanks (28),
which do not run perpendicularly with respect to the surface (13) of the component (1, 120, 130, 155).

## Revendications

1. Procédé de soudage d'une pièce (1, 120, 130, 155), dans lequel on remplit un évidement (4) par des cordons (6, 7, I, II, III, 10', 10'', 10''', ...) de soudure,
l'évidement (4 ) ayant un contour ( 16 ),
qui ( 16 ) délimite une surface ( 13 ) supérieure extérieure de la pièce ( 1, 120, 130 ,155 ) par rapport à l'évidement ( 4 ), **caractérisé**
**en ce que** l'on met les cordons ( 6, 7, I, II, III, 10', 10'', 10''', ... ) de soudure de manière à ce que les cordons ( 10' , 10'', 10''', ..., 6, 7, I, II, III ) de soudure arrivent sur la surface ( 13 ) aussi à l'extérieur du contour ( 16 ) de l'évidement ( 4 ) et en ce qu'on utilise plusieurs couches ( I, II, III ) de soudure pour remplir l'évidement ( 4 ) ,
jusqu'à ce qu'une dernière couche dépasse complètement de la surface ( 13 ) ,
dans lequel les autres couches ( II, III, ... ) de soudure recouvrent complètement celles ( I, II, ... ) qui les ont précédées directement.

2. Procédé suivant la revendication 1,
dans lequel on met un premier cordon ( 6 ) de soudure,
de manière à ce qu'il ( 6 ) corresponde dans sa forme à la forme du contour ( 16 ).

3. Procédé suivant la revendication 2,
en ce qu'on produit un deuxième cordon ( 7 ) de soudure à l'intérieur du premier cordon ( 6 ) de soudure,
qui ( 6 ) correspond au contour ( 16 ) .

4. Procédé suivant la revendication 2 ou 3,
dans lequel on effectue, à l'intérieur du premier ou du deuxième cordon ( 6, 7 ) de soudure conformément au contour, un remplissage ( 10' , 10'', 10''', ... ) sinueux de l'évidement ( 4 ).

5. Procédé suivant la revendication 1, 2, 3 ou 4,
**caractérisé en ce que**
on utilise une soudure par dépôt laser.

6. Procédé suivant la revendication 1, 2, 3, 4 ou 5,
dans lequel la première couche ( I ) de cordon de soudure recouvre complètement l'évidement ( 4 ).

7. Procédé suivant la revendication 1,
dans lequel les directions ( 25 ) principales des cordons ( 10' , 10'', 10''', ... ) de soudure, des diverses couches ( I, II, III, ... ) de soudure superposées, font entre elles un angle de nettement plus grand que 0° à 90°C,
notamment un angle droit.

8. Procédé suivant la revendication 1, 2, 3, 4, 5, 6 ou 7,
dans lequel on pose sinueusement les cordons ( 10', 10'', 10''', ... ) de soudure d'une couche ( I, II, I I I ) de soudure.

9. Procédé suivant la revendication 1, 2, 3, 4, 5, 6, 7 ou 8,
dans lequel l'évidement ( 4 ) a des flancs ( 28 ), qui ne sont pas perpendiculaires à la surface ( 13 ) de la pièce ( 1, 120, 130, 155 ).
